# FASCICULE DE BREVET EUROPEEN

(11) **EP 2 314 175 B1**
(45) Date de publication et mention de la délivrance du brevet: **01.02.2012**
(21) Numéro de dépôt: 10177767.0
(22) Date de dépôt: 21.09.2010
(51) Int. Cl.: A23N 1/00, B30B 9/22, C12G 1/02

(54) **Pressoire équipé d'une membrane de pressage**
Mit Pressmembran ausgerüstete Presse
Press comprising a pressing membane

(30) Priorité: 26.10.2009 FR 0905127
(43) Date de publication de la demande: 27.04.2011
(73) Titulaire: Bucher Vaslin, 49290 Chalonnes sur Loire (FR)
(72) Inventeur: Kervarec, Emmanuel, 49000, ANGERS (FR); Livenais, Daniel, 53200, CHATEAU-GONTIER (FR)
(74) Mandataire: Godineau, Valérie

(56) Documents cités:
- EP-A1- 2 062 725
- DE-A1- 19 945 789
- DE-A1-102004 023 761
- FR-A1- 2 289 124

## Description

La présente invention concerne un pressoir, de préférence pneumatique, pour séparer les parties solide et liquide, encore appelées jus, d'une matière, telle que de la vendange.

L'invention concerne plus particulièrement un pressoir comportant une cuve présentant un corps cylindrique fermé à chacune de ses extrémités opposées par un flasque, l'un des flasques étant équipé d'un orifice axial pour le remplissage de la cuve en matière à presser, et l'autre flasque étant équipé d'un orifice axial de pressurisation et de dépressurisation. Ladite cuve comprend une membrane de séparation dont la zone de raccordement à la cuve s'étend, d'une part, au niveau d'un flasque, d'un côté du plan médian de la cuve passant par les orifices axiaux, et, d'autre part, au niveau du flasque opposé, de l'autre côté dudit plan médian. La membrane sépare de manière étanche le volume intérieur de la cuve en deux chambres, à savoir l'une, dite chambre de traitement, dans laquelle débouche ledit orifice axial de remplissage de matière, et l'autre, dite chambre de commande, dans laquelle débouche ledit orifice axial de pressurisation et de dépressurisation. Ladite membrane est configurée de manière à pouvoir, d'une part, à l'état pressurisé de la chambre de commande, venir se plaquer contre les parois de la cuve délimitant la chambre de traitement, et, d'autre part, à l'état dépressurisé de la chambre de commande, venir se plaquer contre les parois de la cuve délimitant ladite chambre de commande.

On connaît de l'état de la technique, et notamment de la demande de brevet française déposée par la demanderesse sous le numéro FR 09/03647 le 24 juillet 2009 et publiée sous le numéro FR- 2948317, ou de la demande de brevet européen EP-2.062.725, des pressoirs tels que décrits ci-dessus.

Le fait de disposer la zone de raccordement de la membrane au flasque équipé de l'orifice de remplissage de matière, au-dessus dudit orifice de remplissage par rapport à la paroi de fond de la chambre de traitement, implique de prévoir une surlongueur de la membrane au niveau de la partie de membrane proche de ladite zone de raccordement audit flasque pour compenser l'écartement entre la membrane et l'orifice de remplissage, c'est-à-dire pour compenser le décalage de la zone de raccordement entre membrane et flasque par rapport au plan médian du corps du cylindre. Cette surlongueur de la membrane permet un plaquage complet de ladite membrane contre la paroi de fond de la chambre de traitement et contre les parties des flasques fermant ladite chambre de traitement, de sorte que la totalité de la matière puisse être pressée efficacement pour en extraire le jus.

Cependant, la surlongueur de la membrane qui lui permet d'épouser correctement les parois de la chambre de traitement, génère, en configuration plaquée de la membrane contre les parois de la chambre de commande, des plis au niveau de la zone de raccordement de la membrane audit flasque équipé de l'orifice axial de remplissage, du fait que ladite zone de raccordement entre membrane et flasque est plus proche de la paroi de fond de la chambre de commande que de celle de la chambre de traitement.

Le plaquage de la membrane contre les parois de la chambre de commande s'effectue notamment lors de la vidange pour permettre à un opérateur d'enlever la matière solide restant dans la cuve. La présence des plis de membrane au niveau de sa partie proche de l'orifice de remplissage risque d'entraîner une rétention de matière dans lesdits plis, ce qui rend difficile l'opération de nettoyage de la membrane lors de la vidange de la cuve.

On observe également que de tels plis peuvent gêner le remplissage de la cuve. En effet, lors du remplissage de la cuve la membrane est également plaquée contre les parois de la chambre de commande de manière à maximiser le volume de la chambre de traitement, mais la surlongueur de la membrane provoque des plis, au niveau de la portion de membrane proche de l'orifice de remplissage de matière, qui peuvent retenir une partie de la matière et former un obstacle devant l'entrée de remplissage de matière. La présente invention a pour but de proposer une cuve présentant un orifice axial de remplissage de matière, pour laquelle le risque de formation de plis, à l'état plaqué de ladite membrane contre les parois de la chambre de commande, en particulier à proximité de l'orifice de remplissage de matière, est limité.

A cet effet, l'invention a pour objet un pressoir, de préférence pneumatique, pour séparer les parties solide et liquide, encore appelée jus, d'une matière telle que de la vendange,
ledit pressoir comportant une cuve présentant un corps cylindrique fermé à chacune de ses extrémités opposées par un flasque,
l'un des flasques étant équipé d'un orifice axial pour le remplissage de la cuve en matière à presser, et l'autre flasque étant équipé d'un orifice axial de pressurisation et de dépressurisation,
ladite cuve comprenant une membrane de séparation dont la zone de raccordement à la cuve s'étend, d'une part, au niveau d'un flasque, d'un côté d'un plan médian de la cuve passant par lesdits orifices axiaux, et, d'autre part, au niveau du flasque opposé, de l'autre côté dudit plan médian,
de telle sorte que la membrane sépare de manière étanche le volume intérieur de la cuve en deux chambres, à savoir l'une, dite chambre de traitement, dans laquelle débouche ledit orifice axial de remplissage de matière,
et l'autre, dite chambre de commande, dans laquelle débouche ledit orifice axial de pressurisation et de dépressurisation,
ladite membrane étant configurée de manière à pouvoir, d'une part, à l'état pressurisé de la chambre de commande, venir se plaquer contre les parois de la cuve délimitant la chambre de traitement, et, d'autre part, à l'état dépressurisé de la chambre de commande, venir se plaquer contre les parois de la cuve délimitant ladite chambre de commande,
caractérisé en ce que la partie du flasque équipé dudit orifice axial de remplissage de matière, qui ferme la chambre de commande, présente une protubérance permettant à l'état dépressurisé de ladite chambre de commande, de plaquer la partie de la membrane située du côté dudit flasque, contre la protubérance de manière à éviter ou limiter la formation de plis sur ladite membrane.

Par orifice axial, on entend que l'axe de chaque orifice est sensiblement confondu avec l'axe longitudinal du corps cylindrique de la cuve. L'orifice de pressurisation et dépressurisation correspond à une arrivée d'air ou de gaz permettant de pressuriser ou de dépressuriser la chambre de commande, et donc de commander le déplacement de la membrane vers le fond de la chambre de commande ou vers le fond de la chambre de traitement. L'orifice d'admission de matière correspondant à une entrée par laquelle la matière est admise dans la cuve. La protubérance présente sur le flasque pourvu de l'orifice de remplissage de matière permet d'éviter, lors du plaquage de la membrane contre les parois de la chambre de commande, la formation de plis à proximité de l'orifice de remplissage et ainsi la rétention de matière dans les plis éventuels de la membrane lors de la vidange. En effet, la protubérance permet d'assurer une tension suffisante de la membrane, par plaquage de ladite membrane contre les parois de la chambre de commande, en augmentant la surface de plaquage disponible pour la membrane au niveau du flasque équipé de l'orifice de remplissage de matière, du côté de la chambre de commande.

La membrane étant plaquée contre la protubérance du flasque équipé de l'orifice de remplissage, les plis formant zones de rétention de matière sont limités, ce qui permet de nettoyer de manière fiable la membrane. L'opérateur peut ainsi nettoyer l'intérieur de la cuve et en particulier la membrane avec un simple jet.

La configuration axiale des orifices de remplissage de matière et de mise en pression/dépression de la chambre de commande, autorise la mise en rotation de la cuve tout en permettant une alimentation de la chambre de traitement et un actionnement de la membrane au cours de la rotation de la cuve. La rotation de la cuve permet notamment d'éviter la sédimentation des parties solides de matière après extraction des jus, lesdites parties solides risquant de sédimenter au niveau des moyens de drainage et d'empêcher une bonne évacuation des jus.

Selon une caractéristique avantageuse de l'invention, ladite protubérance fait saillie dudit flasque en direction de l'intérieur de la cuve. En variante, ladite protubérance fait saillie dudit flasque en direction de l'extérieur de la cuve.

Selon un mode de réalisation préféré de l'invention, ladite protubérance est formée par un élément rapporté sur ledit flasque. En variante, la protubérance est obtenue par une déformation du flasque équipé dudit orifice axial de remplissage de matière.

Avantageusement, la protubérance est formée à partir d'un flan dans lequel sont ménagées des encoches pour définir des zones de pliage permettant de lui donner, d'une part, une forme bombée en coupe transversale, et, d'autre part, un profil longitudinal s'étendant sensiblement en arc de cercle.

Selon une caractéristique avantageuse de l'invention, ladite protubérance présente une forme allongée et courbée en arc de cercle qui suit globalement la zone de raccordement de la membrane au flasque équipé dudit orifice axial de remplissage de matière. Préférentiellement, la protubérance s'étend suivant un arc de cercle de concavité tournée vers l'orifice axial de remplissage de matière.

Selon une caractéristique avantageuse de l'invention, ladite protubérance est située à proximité dudit orifice axial de remplissage de matière.

Selon une caractéristique avantageuse de l'invention, la membrane est raccordée à l'intérieur de la cuve par l'intermédiaire d'un cadre de raccordement qui présente deux longerons opposés solidaires du corps de cylindre, reliés entre eux par deux traverses opposées solidaires chacune d'un flasque.

Selon une caractéristique avantageuse de l'invention, ladite chambre de traitement est équipée de moyens de drainage des jus contenus dans la cuve vers l'extérieur de la cuve, lesdits moyens de drainage étant de préférence situés sur le corps de cylindre.

L'invention sera bien comprise à la lecture de la description suivante d'exemples de réalisation, en référence aux dessins annexés dans lesquels :
- la figure 1 est une vue en perspective d'un pressoir selon l'invention équipé du côté intérieur d'un des flasques d'une protubérance ;
- la figure 2 est une vue de détail du côté intérieur dudit flasque du pressoir de la figure 1 montrant ladite protubérance ;
- la figure 3 est une vue de la membrane en position plaquée contre les parois de la chambre de commande, et en particulier contre la protubérance ;
- la figure 4 est une vue en coupe transversale du pressoir selon l'invention, en configuration de pressage de la matière à traiter par la membrane ;
- la figure 5 est une vue du pressoir de la figure 4 en configuration plaquée de la membrane contre les parois de la chambre de commande, par exemple pour le remplissage en matière de la chambre de traitement ou la vidange ;
- la figure 6 est une vue du pressoir de la figure 4 en configuration plaquée de la membrane contre les parois de la chambre de traitement et en particulier contre les moyens de drainage situés sur le corps de cylindre par exemple pour réaliser une opération de nettoyage automatique des moyens de drainage.

En référence aux figures et comme rappelé ci-dessus, l'invention concerne un pressoir, de préférence pneumatique, pour séparer les parties solide et liquide, encore appelée jus, d'une matière telle que de la vendange.

Ledit pressoir comporte une cuve 1, de préférence rotative, présentant un corps 10 cylindrique fermé à chacune de ses extrémités opposées par un flasque 14, 15. Le flasque 14 est équipé d'un orifice axial 11 pour le remplissage de la cuve en matière à presser, et le flasque 15 est équipé d'un orifice axial 12 de pressurisation et de dépressurisation.

Ladite cuve comprend une membrane 2 souple de séparation dont la zone de raccordement à la cuve s'étend, d'une part, au niveau d'un flasque, d'un côté d'un plan longitudinal médian ou diamétral de la cuve passant par l'orifice axial 11 de remplissage de matière et l'orifice axial 12 de pressurisation et de dépressurisation, et, d'autre part, au niveau du flasque opposé, de l'autre côté dudit plan médian longitudinal.

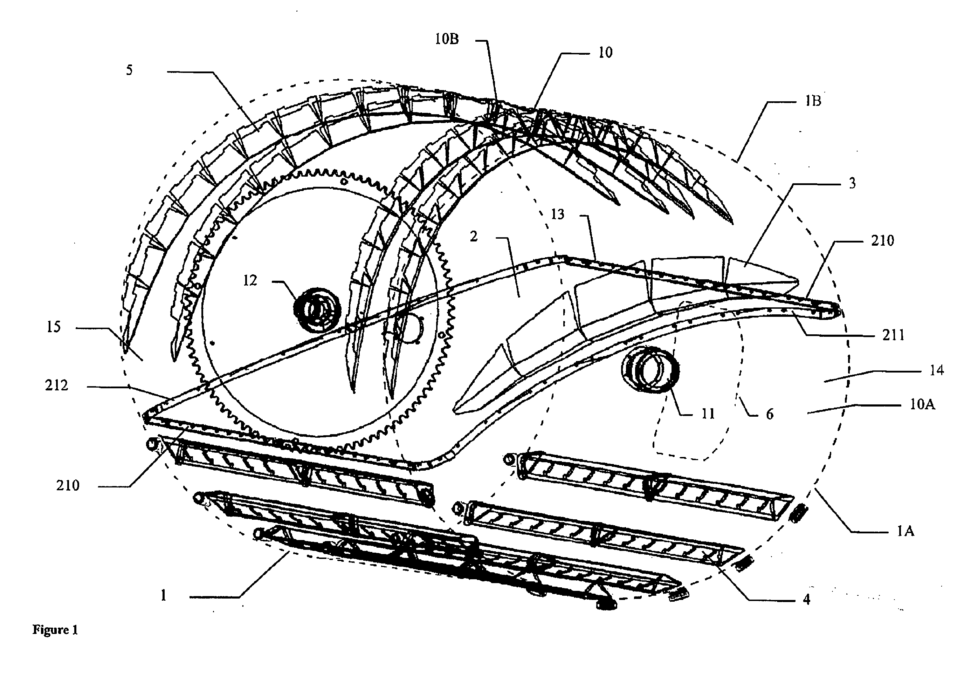

Comme illustré à la figure 1, la membrane 2 est raccordée à l'intérieur de la cuve par l'intermédiaire d'un cadre 13 de raccordement qui présente deux longerons opposés formés par des profilés longitudinaux solidaires du corps de cylindre pour la fixation des bords longitudinaux 210 de la membrane. Les profilés longitudinaux du cadre de fixation 13 sont reliés entre eux par deux traverses opposées formées par des profilés latéraux solidaires chacun d'un flasque pour la fixation d'un bord latéral 211, 212 de la membrane. Ainsi, le cadre 13 de raccordement de la membrane à la cuve est incliné par rapport audit plan médian de la cuve passant par les orifices 11, 12 de remplissage de matière et de mise en pression/dépression en s'étendant de part et d'autre dudit plan médian.

La membrane 2 sépare de manière étanche le volume intérieur de la cuve en deux chambres 1A, 1 B, à savoir l'une 1 A, dite chambre de traitement, dans laquelle débouche ledit orifice axial 11 de remplissage de matière, ladite chambre 1A de traitement étant équipée de moyens de drainage 4 des jus contenus dans la cuve, et l'autre 1 B, dite chambre de commande, dans laquelle débouche ledit orifice axial 12 de pressurisation et de dépressurisation 12. Ledit orifice axial 12 est raccordable à une unité de pressurisation et de dépressurisation permettant soit, l'aspiration de l'air ou gaz contenu dans la chambre 1B de commande, en particulier pendant les phases de remplissage, d'émiettage et de vidage de la cuve, soit, l'admission dans cette chambre d'air ou gaz comprimé, en particulier pendant les phases de pressurage. L'orifice axial 11 de remplissage est raccordable, de préférence par l'intermédiaire d'un raccord tournant, à des moyens d'alimentation en matière à presser.

Comme illustré à la figure 1, le profilé du cadre 13 servant au raccordement de la partie 212 de la membrane 2 au flasque 15 est situé en dessous de l'orifice 12 de pressurisation/dépressurisation, par référence à la paroi de fond 10A de la chambre de traitement 1 A formée par la partie correspondante du corps 1 de cylindre lorsque cette partie 10A forme la partie inférieure de la cuve. La partie 211 de la membrane raccordée au flasque 14 s'étend au-dessus de l'orifice 11 de remplissage de matière par référence à ladite paroi de fond 10A de la chambre de traitement 1A. Ladite paroi de fond 10A de la chambre de traitement 1A est équipée desdits moyens de drainage 4. Les parois de fond 10A, 10B des chambres 1 A, 1 B sont respectivement formées par les deux parties du corps de cylindre séparées par la membrane.

Cette cuve 1, disposée à l'horizontale est supportée à rotation par un châssis support (non représenté). Ce châssis support comporte par exemple deux potelets portant chacun un palier coopérant avec un tourillon de la cuve disposé au centre du flasque 14, 15 de chaque cuve, c'est-à-dire coaxialement avec les orifices 1 1 , 12 de remplissage de matière et de pressurisation/dépressurisation. La cuve 1 est ainsi montée à rotation autour de son axe longitudinal.

Ladite membrane 2 est configurée, en particulier dimensionnée et conformée, de manière à pouvoir, d'une part, à l'état pressurisé de la chambre 1 B de commande, venir se plaquer contre les parois de la cuve délimitant la chambre 1A de traitement, et, d'autre part, à l'état dépressurisé de la chambre 1 B de commande, venir se plaquer contre les parois de la cuve délimitant ladite chambre 1 B de commande.

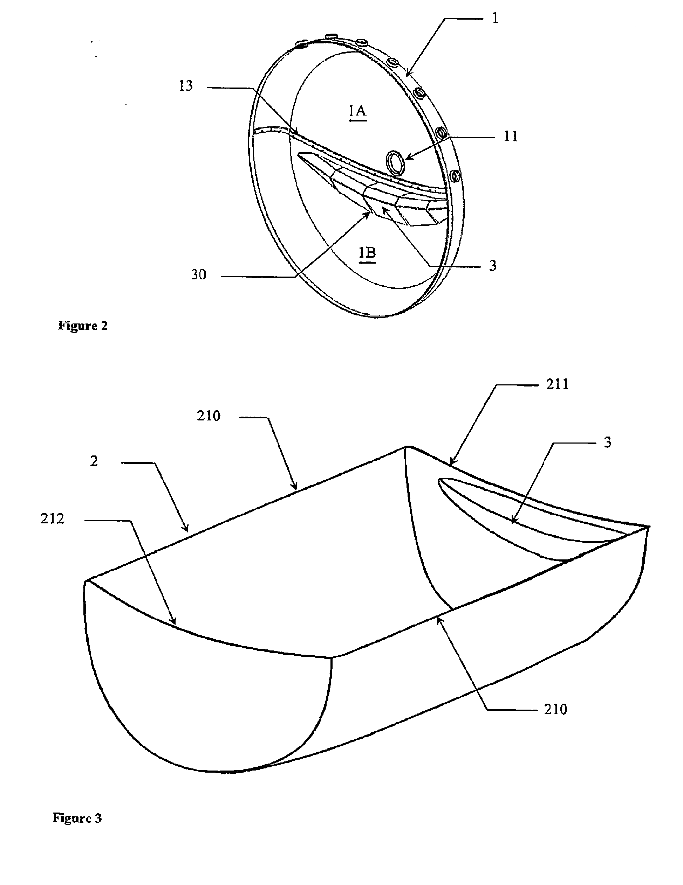

Dans l'exemple illustré aux figures, la membrane est composée de trois pièces, à savoir une partie centrale de forme générale quadrangulaire dont deux bords opposés dits d'extrémité sont respectivement raccordés à deux demi-disques pour obtenir comme illustré à la figure 3, une forme générale en demi-cylindre souple fermé à ses extrémités par lesdits demi-disques. Le bord d'extrémité de la partie centrale situé côté orifice de remplissage ainsi que le rayon du demi-disque raccordé audit bord latéral de la partie centrale présentent chacun une surlongueur pour compenser le décalage de la zone de raccordement de la membrane 2 au flasque 14 par rapport à l'axe du corps cylindrique.

De manière caractéristique à l'invention, la partie du flasque 14 équipé dudit orifice axial 11 de remplissage de matière qui ferme la chambre 1 B de commande, présente une protubérance 3 permettant à l'état dépressurisé de ladite chambre 1 B de commande, de plaquer la partie de la membrane située du côté dudit flasque 14, contre la protubérance 3 de manière à éviter ou limiter la formation de plis sur ladite membrane 2 à l'état plaqué de celle-ci contre les parois de la chambre 1 B de commande.

Grâce à la présence de la protubérance 3 sur le flasque 14 du côté de la chambre de commande 1 B, le nettoyage de la membrane est facilité lors de l'opération de vidange de la cuve. De même, le risque d'obturation de l'orifice de remplissage de matière est réduit.

En particulier, ladite protubérance 3 présente une forme allongée et courbée en arc de cercle qui suit globalement le profil du bord 211 de la membrane raccordé au flasque 14 équipé dudit orifice 11 axial de remplissage de matière. La concavité de l'arc de cercle formé par la protubérance est tournée vers l'orifice axial 11 de remplissage de matière. De manière générale, la protubérance 3 présente en section transversale un profil général de console à bout arrondi.
Ladite protubérance 3 est située à proximité dudit orifice 11 axial de remplissage de matière 11, c'est-à-dire également à proximité de la partie de cadre de raccordement 13 servant à raccorder la membrane de 2 au flasque14. Ladite protubérance 3 est formée par un élément rapporté sur ledit flasque 14 côté intérieur de la cuve. Dans l'exemple illustré aux figures, la protubérance 3 est formée à partir d'un flan, par exemple métallique, dans lequel sont ménagées des encoches 30 pour définir des zones de pliage permettant de lui donner une forme bombée s'étendant sensiblement en arc de cercle. En variante, on peut prévoir que la protubérance soit obtenue par une déformation dudit flasque 14, de préférence côté intérieur, éventuellement côté extérieur.

La chambre 1A de traitement contient des moyens 4 de drainage des jus contenus dans la cuve 1. Lesdits moyens 4 de drainage se présentent généralement sous forme de canaux longitudinaux de drainage. Lesdits moyens de drainage sont en communication fluidique avec des moyens de sortie des jus (non représentés) raccordables à un réservoir de collecte pour un transfert des jus quittant la cuve par lesdits moyens de drainage vers ledit réservoir de collecte. Dans l'exemple illustré aux figures, les canaux de drainage longitudinaux sont formés au moyen d'éléments profilés ajourés sur la face interne de la paroi de la cuve en s'étendant suivant les génératrices de ladite cuve. Ces éléments profilés forment également un tamis de filtrage du fait de la présence d'orifices, tels que trous ou fentes, ménagés dans leur paroi.

On peut prévoir que les moyens de sortie de jus comprennent à la fois des moyens de sortie de jus, dits intermittents, c'est-à-dire raccordables de manière discontinue à la cuve, le raccordement étant apte à s'opérer à l'état non entraîné en rotation de la cuve lorsque la cuve occupe une position angulaire prédéterminée, dite de pressurage, et des moyens de sortie de jus, dits permanents, c'est-à-dire raccordables au réservoir de collecte quelle que soit la position angulaire prise par la cuve et en particulier à l'état entraîné en rotation de la cuve.

Dans ce cas, les moyens de sortie de jus permanents comportent au moins un raccord tournant (non représenté) disposé au niveau de l'axe de rotation de la cuve. Ce raccord tournant comporte au moins deux orifices, l'un, pour le raccordement aux moyens de drainage, l'autre, apte à être raccordé au réservoir de collecte. Les moyens de sortie de jus intermittents comportent quant à eux au moins une ouverture de sortie obturable, désaxée, par rapport à l'axe de rotation de la cuve et positionnable en un point bas de la cuve dans une position angulaire prédéterminée, dite position de pressurage de la cuve, en vue de former une sortie de vidange de la cuve au moins par écoulement gravitaire.
Le corps du cylindre comporte également côté chambre de traitement 1A une ouverture 6 obturable par une trappe ou porte notamment pour la vidange des parties solides restantes de la matière après pressage.

Le pressoir comporte des moyens de pilotage de l'entraînement en rotation de la cuve et des moyens de pilotage de pression dans la chambre de commande pour piloter l'actionnement de la membrane. Le pressoir comporte en outre des moyens de pilotage de l'alimentation de la chambre 1A de traitement en matière.

A l'état pressurisé de la chambre de commande, la membrane tend à être plaquée en direction des moyens de drainage, de manière à presser la matière pour en extraire des jus qui s'écoulent alors par lesdits moyens de drainage 4.

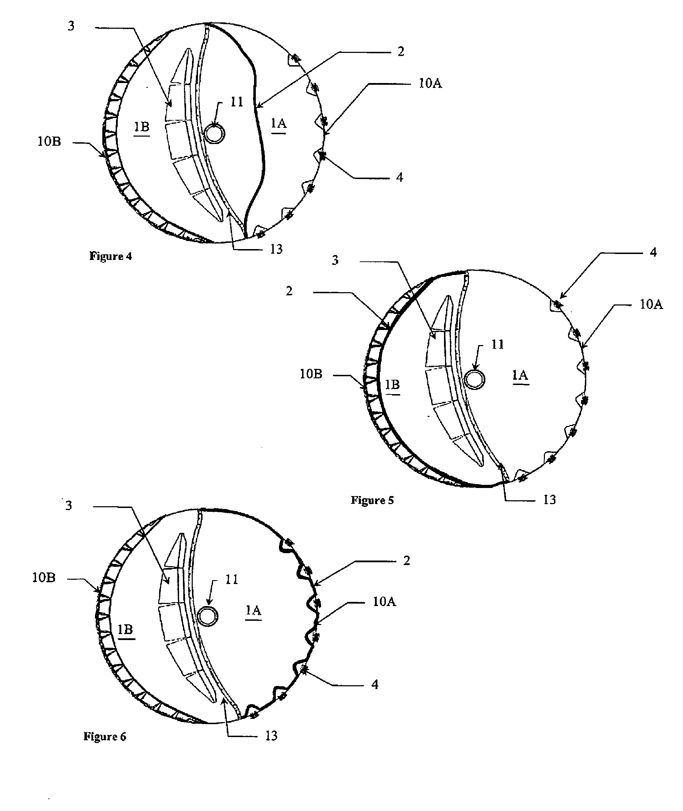

Lorsque la chambre de commande 1 B est mise en dépression, comme illustré à la figure 5, la membrane tend à être plaquée contre les parois de ladite chambre de commande, ce qui permet au cours du remplissage de la chambre de traitement 1A d'optimiser le volume de ladite chambre de traitement 1A disponible. Lors de la phase de vidange, le plaquage de la membrane contre les parois de la chambre de commande 1 B permet également de nettoyer aisément l'intérieur de la cuve, en particulier la chambre de traitement 1A et la membrane 2.

La possibilité de mettre en pression et en dépression la chambre de commande 1 B permet également d'appliquer à la membrane des mouvements d'aller-retour de la membrane contre la matière à traiter (voir figure 4) afin de la presser de manière efficace pour en extraire les jus.
Grâce à un tel pressoir, l'opération de pressurage s'opère tel que suit. On raccorde dans un premier temps le réservoir de collecte aux moyens de drainage de la cuve.

Avant de remplir la chambre de traitement en matière telle que de la vendange, on aspire à l'aide des moyens d'aspiration, par l'entrée 12 équipant la chambre de commande 1 B, l'air, ou tout autre agent de pression équivalent, hors de la chambre de commande 1 B de la cuve de sorte que le vide s'y produit et que la membrane 2 se plaque contre les parties du corps de cylindre et des flasques de la cuve servant à la délimitation de ladite chambre 1 B de commande.

Le remplissage de la cuve du pressoir avec la matière à presser peut s'opérer, à l'arrêt de la cuve, par la porte 6 dont est équipée la chambre de traitement, et/ou par l'orifice axial d'admission de matière avantageusement équipé d'un raccord tournant pour permettre un remplissage pendant la rotation de la cuve. Comme rappelé ci-dessus, la présence de la protubérance 3 permet d'éviter la présence de plis de la membrane à proximité de l'orifice axial 11 de remplissage.

Lorsque le remplissage est terminé, le programme d'extraction des jus par pressurage peut être lancé. Pour réaliser le pressurage, une fois le remplissage effectué, on alimente en air, ou en agent de pression équivalent, la chambre 1 B de commande de sorte que, comme illustré à la figure 4, la membrane est pressée contre la matière, présente dans la chambre 1A de traitement, qui est elle-même mise sous pression contre les moyens 4 de drainage. Il en résulte que la partie liquide de cette matière s'écoule au travers des moyens de drainage 4 tandis que la partie solide reste dans la cuve en dehors desdits moyens de drainage.

En général, on procède à plusieurs phases de mise sous pression de la matière telle que de la vendange, les phases de pressurage étant séparées d'une part, par des phases de vide au cours desquelles on écarte la membrane des moyens de drainage comme mentionné ci-dessus et d'autre part, par des phases d'émiettage au cours desquelles on fait tourner la cuve autour de son axe pour disloquer le gâteau de matière qui se forme sous l'effet de la pression.

Pour une opération de vidange manuelle de la cuve, la membrane est plaquée contre les parois de la chambre de commande 1B pour permettre à un opérateur d'enlever la matière solide restant dans la cuve (figure 5). Pour vider la cuve, une fois le pressurage effectué, on ouvre la porte équipant la paroi latérale de la cuve et on fait tourner la cuve de sorte que la partie solide restant dans la chambre de traitement 1A s'évacue progressivement au travers de l'ouverture 6 démasquée par la porte. L'opérateur peut alors nettoyer la membrane en faisant passer un jet d'eau à travers l'ouverture 6 latérale ménagée dans le corps de cylindre côté chambre de traitement pour nettoyer la membrane plaquée contre la paroi de fond 10B de la chambre de commande 1 B. Comme rappelé ci-dessus, la protubérance 3 facilite le nettoyage de la membrane. Avantageusement, la paroi de fond 10B de la chambre de commande 1 B est équipée de nervures 5 qui s'étendent en saillie de ladite paroi de fond 10B, côté intérieur de la cuve pour guider et faciliter le détachement des matières collées sur la membrane, afin de faciliter leurs évacuations par l'ouverture 6 radiale lors de l'opération de vidange.

Comme illustré à la figure 6, on peut également prévoir une étape de lavage automatique des moyens de drainage en configuration plaquée de la membrane contre les parois de la chambre de traitement et, en particulier, contre les moyens de drainage situés sur le corps de cylindre. De l'eau sous pression est alors injectée depuis l'extérieur de la cuve à travers les drains contre la membrane pour laver ladite membrane.

La présente invention n'est nullement limitée aux modes de réalisation décrits et représentés, mais l'homme du métier saura y apporter toute variante conforme à l'invention comme définie dans les revendications.

## Revendications

1. Pressoir, de préférence pneumatique, pour séparer les parties solide et liquide, encore appelée jus, d'une matière telle que de la vendange,
ledit pressoir comportant une cuve (1) présentant un corps (10) cylindrique fermé à chacune de ses extrémités opposées par un flasque (14, 15),
l'un (14) des flasques étant équipé d'un orifice axial (11) pour le remplissage de la cuve en matière à presser, et l'autre flasque (15) étant équipé d'un orifice axial (12) de pressurisation et de dépressurisation,
ladite cuve comprenant une membrane (2) de séparation dont la zone de raccordement à la cuve s'étend, d'une part, au niveau d'un flasque, d'un côté d'un plan médian de la cuve passant par lesdits orifices axiaux (11, 12), et, d'autre part, au niveau du flasque opposé, de l'autre côté dudit plan médian,
de telle sorte que la membrane (2) sépare de manière étanche le volume intérieur de la cuve en deux chambres (1A, 1B), à savoir l'une (1A), dite chambre de traitement, dans laquelle débouche ledit orifice axial (11) de remplissage de matière,
et l'autre (1 B), dite chambre de commande, dans laquelle débouche ledit orifice axial (12) de pressurisation et de dépressurisation (12),
ladite membrane étant configurée de manière à pouvoir, d'une part, à l'état pressurisé de la chambre (1 B) de commande, venir se plaquer contre les parois de la cuve délimitant la chambre (1A) de traitement, et, d'autre part, à l'état dépressurisé de la chambre (1 B) de commande, venir se plaquer contre les parois de la cuve délimitant ladite chambre (1 B) de commande,
**caractérisé en ce que** la partie du flasque (14) équipé dudit orifice axial (11) de remplissage de matière, qui ferme la chambre (1 B) de commande, présente une protubérance (3) permettant à l'état dépressurisé de ladite chambre (1 B) de commande, de plaquer la partie de la membrane située du côté dudit flasque (14), contre la protubérance (3) de manière à éviter ou limiter la formation de plis sur ladite membrane (2).

2. Dispositif selon la revendication 1, **caractérisé en ce que** ladite protubérance (3) fait saillie dudit flasque (14) en direction de l'intérieur de la cuve.

3. Dispositif selon la revendication 1, **caractérisé en ce que** ladite protubérance (3) fait saillie dudit flasque (14) en direction de l'extérieur de la cuve.

4. Dispositif selon l'une des revendications 1 à 3, **caractérisé en ce que** ladite protubérance (3) est formée par un élément rapporté sur ledit flasque (14).

5. Dispositif selon la revendication 4, **caractérisé en ce que** la protubérance (3) est formée à partir d'un flan dans lequel sont ménagées des encoches (30) pour définir des zones de pliage permettant de lui donner, d'une part, une forme bombée en coupe transversale, et, d'autre part, un profil longitudinal s'étendant sensiblement en arc de cercle.

6. Dispositif selon l'une des revendications 1 à 3, **caractérisé en ce que** la protubérance est obtenue par une déformation du flasque (14) équipé dudit orifice axial de remplissage de matière (11).

7. Dispositif selon l'une des revendications précédentes, **caractérisé en ce que** ladite protubérance (3) présente une forme allongée et courbée en arc de cercle qui suit globalement la zone de raccordement de la membrane (2) au flasque (14) équipé dudit orifice (11) axial de remplissage de matière.

8. Dispositif selon la revendication 7, **caractérisé en ce que** la protubérance (3) s'étend suivant un arc de cercle de concavité tournée vers l'orifice axial (11) de remplissage de matière.

9. Dispositif selon l'une des revendications précédentes, **caractérisé en ce que** ladite protubérance (3) est située à proximité dudit orifice (11) axial de remplissage de matière (11).

10. Dispositif selon l'une des revendications précédentes, **caractérisé en ce que** la membrane est raccordée à l'intérieur de la cuve par l'intermédiaire d'un cadre de raccordement qui présente deux longerons opposés solidaires du corps de cylindre, reliés entre eux par deux traverses opposées solidaires chacune d'un flasque.

## Claims

1. A press, preferably a pneumatic press, for separating the solid part and the liquid part, also called juice, of a material such as a crop of grapes,
said press comprising a tub (1) having a cylindrical body (10) closed at each of the opposite ends thereof by a flange (14, 15),
one (14) of the flanges being fitted with an axial orifice (11) for filling the tub with material to be pressed, and the other flange (15) being fitted with an axial orifice (12) for pressurizing and depressurizing,
said tub comprising a dividing membrane (2) the area for connecting to the tub of which extends on the one hand at one flange, on one side of a center plane of the tub passing through said axial orifices (11, 12), and on the other hand, at the opposite flange, on the other side of said center plane,
so that the membrane (2) sealingly divides the inner volume of the tub into two chambers (1A, 1B), namely one (1A) so-called processing chamber into which said material-filling axial orifice (11) opens,
and the other (1B) so-called control chamber into which said pressuring and depressurizing axial orifice (12) opens,
said membrane being configured so as to be able, on the one hand, in the pressurized state of the control chamber (1B) to press against the walls of the tub delimiting the processing chamber (1A), and on the other hand, in the depressurized state of the control chamber (1B) to press against the walls of the tub delimiting said control chamber (1B),
**characterized in that** the part of the flange (14) fitted with said material-filling axial orifice (11) closing the control chamber (1B) has a protuberance (3) allowing in the depressurized state of said control chamber (1B) for the part of the membrane located on the side of said flange (14) to be pressed against the protuberance (3) so as to avoid or limit the formation of folds on said membrane (2).

2. The device according to claim 1, **characterized in that** said protuberance (3) protrudes from said flange (14) toward the inside of the tub.

3. The device according to claim 1, **characterized in that** said protuberance (3) protrudes from said flange (14) toward the outside of the tub.

4. The device according to any of claims 1 to 3, **characterized in that** said protuberance (3) is formed by an attached element on said flange (14).

5. The device according to claim 4, **characterized in that** the protuberance (3) is formed from a blank in which notches (30) are made to define folding areas allowing to give the same on the one hand an arched cross-sectional shape, and on the other hand, a longitudinal profile substantially extending as a circular arc.

6. The device according to any of claims 1 to 3, **characterized in that** the protuberance is obtained by deformation of the flange (14) fitted with said material-filling axial orifice (11).

7. The device according to any of the preceding claims, **characterized in that** said protuberance (3) has an elongated and curved circular arc shape globally following the connecting area of the membrane (2) to the flange (14) fitted with said material-filling axial orifice (11).

8. The device according to claim 7, **characterized in that** the protuberance (3) extends along a circular arc having a concavity oriented toward the material-filling axial orifice (11).

9. The device according to any of the preceding claims, **characterized in that** said protuberance (3) is located close to said material-filling axial orifice (11).

10. The device according to any of the preceding claims, **characterized in that** the membrane is connected to the inside of the tub via a connecting frame having two opposite longitudinal beams integral with the cylindrical body, connected together by two opposite transverse beams respectively integral with a flange.

## Patentansprüche

1. Kelter, bevorzugt pneumatische Kelter, zum Trennen des festen Anteils und des flüssigen Anteils, auch Saft genannt, einer Masse, wie etwa Lesegut,
wobei die Kelter einen Bottich (1) umfasst, der einen zylindrischen Körper (10) aufweist, der an jedem seiner gegenüberliegenden Enden durch einen Flansch (14, 15) verschlossen ist,
wobei einer (14) der Flansche mit einer Axialöffnung (11) zum Füllen des Bottichs mit einer zu kelternden Masse ausgestattet ist, und der andere Flansch (15) mit einer Axialöffnung (12) zur Druckbeaufschlagung und Druckminderung ausgestattet ist,
wobei der Bottich eine Trennmembran (2) umfasst, deren Anschlussbereich an den Bottich sich einerseits an einem Flansch auf einer Seite einer Mittelebene des Bottichs, die durch die Axialöffnungen (11, 12) geht, und andererseits am gegenüberliegenden Flansch auf der anderen Seite der Mittelebene erstreckt,
so dass die Membran (2) das Innenvolumen des Bottichs dicht in zwei Kammern (1A, 1B) unterteilt, nämlich eine (1A) so genannte Verarbeitungskammer, in welche die Axialöffnung (11) zum Einfüllen der Masse einmündet,
und die andere (1B) so genannte Steuerkammer, in welche die Axialöffnung (12) zur Druckbeaufschlagung und Druckminderung einmündet,
wobei die Membran derart konfiguriert ist, dass sie einerseits in der Lage ist, sich im mit Druck beaufschlagten Zustand der Steuerkammer (1B) an die Wände des Bottichs, welche die Verarbeitungskammer (1A) begrenzen, anzudrücken, und sich andererseits im drucklosen Zustand der Steuerkammer (1B) an die Wände des Bottichs, welche die Steuerkammer (1B) begrenzen, anzudrücken,
**dadurch gekennzeichnet, dass** der Teil des Flansches (14), der mit der Axialöffnung (11) zum Einfüllen einer Masse ausgestattet ist und die Steuerkammer (1B) verschließt, eine Ausstülpung (3) aufweist, die es im drucklosen Zustand der Steuerkammer (1B) ermöglicht, den Teil der Membran, der sich auf der Seite des Flansches (14) befindet, an die Ausstülpung (3) anzudrücken, um die Bildung von Falten auf der Membran (2) zu vermeiden oder einzuschränken.

2. Vorrichtung nach Anspruch 1, **dadurch gekennzeichnet, dass** die Ausstülpung (3) von dem Flansch (14) zum Innern des Bottichs hin vorsteht.

3. Vorrichtung nach Anspruch 1, **dadurch gekennzeichnet, dass** die Ausstülpung (3) von dem Flansch (14) zum Äußern des Bottichs hin vorsteht.

4. Vorrichtung nach einem der Ansprüche 1 bis 3, **dadurch gekennzeichnet, dass** die Ausstülpung (3) von einem an dem Flansch (14) angesetzten Element gebildet ist.

5. Vorrichtung nach Anspruch 4, **dadurch gekennzeichnet, dass** die Ausstülpung (3) aus einem Rohling gebildet ist, in dem Kerben (30) eingerichtet sind, um Faltbereiche zu definieren, die es ermöglichen, ihm einerseits eine gewölbte Querschnittsform und andererseits ein längliches Profil, das sich im Wesentlichen kreisbogenförmig erstreckt, zu verleihen.

6. Vorrichtung nach einem der Ansprüche 1 bis 3, **dadurch gekennzeichnet, dass** die Ausstülpung durch eine Verformung des Flansches (14) erzielt wird, die mit der Axialöffnung (11) zum Einfüllen einer Masse ausgestattet ist.

7. Vorrichtung nach einem der vorhergehenden Ansprüche, **dadurch gekennzeichnet, dass** die Ausstülpung (3) eine längliche und kreisbogenförmig gekrümmte Form aufweist, die sich insgesamt dem Verbindungsbereich der Membran (2) an den Flansch (14) anpasst, der mit der Axialöffnung (11) zum Einfüllen einer Masse ausgestattet ist.

8. Vorrichtung nach Anspruch 7, **dadurch gekennzeichnet, dass** sich die Ausstülpung (3) in einem Kreisbogen erstreckt, der eine Konkavität aufweist, die der Axialöffnung (11) zum Einfüllen einer Masse zugewandt ist.

9. Vorrichtung nach einem der vorhergehenden Ansprüche, **dadurch gekennzeichnet, dass** die Ausstülpung (3) sich in der Nähe der Axialöffnung (11) zum Einfüllen einer Masse befindet.

10. Vorrichtung nach einem der vorhergehenden Ansprüche, **dadurch gekennzeichnet, dass** die Membran mit dem Innern des Bottichs über einen Anschlussrahmen verbunden ist, der zwei gegenüberliegende Längsträger aufweist, die mit dem Zylinderkörper einstückig sind und die über zwei gegenüberliegende Querträger miteinander verbunden sind, die jeweils mit einem Flansch einstückig sind.
